(19) Europäisches Patentamt
European Patent Office
Office européen des brevets

(11) **EP 1 789 906 B1**

(12) **EUROPÄISCHE PATENTSCHRIFT**

(45) Veröffentlichungstag und Bekanntmachung des Hinweises auf die Patenterteilung:
**04.11.2009 Patentblatt 2009/45**

(21) Anmeldenummer: **05782069.8**

(22) Anmeldetag: **06.09.2005**

(51) Int Cl.:
***G06K 9/00*** *(2006.01)*    ***B60R 25/00*** *(2006.01)*

(86) Internationale Anmeldenummer:
**PCT/EP2005/009544**

(87) Internationale Veröffentlichungsnummer:
**WO 2006/029739 (23.03.2006 Gazette 2006/12)**

(54) **VERFAHREN ZUR BILDBASIERTEN FAHRERIDENTIFIKATION IN EINEM KRAFTFAHRZEUG**

IMAGE-BASED DRIVER IDENTIFICATION METHOD FOR USE IN A MOTOR VEHICLE

PROCEDE POUR IDENTIFIER SUR LA BASE D'IMAGES LE CONDUCTEUR DANS UN VEHICULE AUTOMOBILE

(84) Benannte Vertragsstaaten:
**DE ES FR GB IT SE**

(30) Priorität: **16.09.2004 DE 102004044771**

(43) Veröffentlichungstag der Anmeldung:
**30.05.2007 Patentblatt 2007/22**

(73) Patentinhaber: **Bayerische Motoren Werke Aktiengesellschaft**
**80809 München (DE)**

(72) Erfinder: **WEIDHAAS, Stefan**
**80809 München (DE)**

(56) Entgegenhaltungen:
WO-A-02/08023     DE-A1- 19 819 961
US-A- 5 729 619     US-A1- 2001 019 620

**Beschreibung**

Die Erfindung betrifft ein Verfahren zur bildbasierten Fahreridentifikation in einem Kraftfahrzeug durch die Aufnahme mindestens eines zweidimensionalen Fahrergesichtsbilds mittels einer Kamera, die Zwischenspeicherung aufgenommener Fahrergesichtsbilder und den Vergleich zwischengespeicherter Fahrergesichtsbilder mit zweidimensionalen Referenzbildern jeweils eines möglichen Fahrers aus einer Vielzahl möglicher Fahrer des Kraftfahrzeugs.

Die Identifikation von Personen auf Basis einer optischen Gesichtserkennung findet zunehmend Anwendung in Systemen mit Zutritts-/Benutzungsbeschränkung. Als Beispiele sind der Zutritt zu sicherheitskritischen Bereichen in Gebäuden und die Benutzung von Kraftfahrzeugen zu nennen. Zudem sind insbesondere im Kraftfahrzeug-Bereich Konzepte bekannt, gemäß derer Komforteinstellungen für einen bestimmten Fahrer nach dessen mittels Gesichtserkennung erfolgter Identifikation automatisch übernommen werden.

Zur bildbasierten Gesichtserkennung einer Zielperson, insbesondere des Fahrers eines Kraftfahrzeugs, ist in jedem Fall durch eine Kamera mindestens ein Bild des Gesichts aufzunehmen. Das Gesichtsbild der Zielperson wird anschließend computergestützt mit gespeicherten, typischerweise in einer Datenbank abgelegten, Referenzbildern verschiedener möglicher Zielpersonen verglichen. Dieser Vergleich kann auf der Basis der reinen Bilddaten oder auf der Basis von aus den Bildern extrahierten Merkmalen erfolgen. Die Identität der Zielperson wird anschließend aufgrund des beim Vergleich der Bilder bzw. ihrer Merkmale festgestellten Grades der Übereinstimmung beurteilt.

Prinzipiell ist es für eine gute Erkennungsleistung von Vorteil, wenn die miteinander verglichenen Bilder in etwa denselben Aufnahmewinkel, d.h. denselben Winkel zwischen der aufnehmenden Kamera und der Gesichtsnormalen der Zielperson aufweisen. Dem Funktionsprinzip der Mehrzahl bekannter Gesichtserkennungssysteme liegt zudem die Annahme zugrunde, dass die wesentlichen Charakteristika eines Gesichts optisch am besten bei Frontalaufnahmen erfasst werden können.

Daher werden in den meisten bekannten Systemen lediglich Frontalaufnahmen als Referenzbilder in einer Datenbank abgelegt. Bei der Aufnahme von Gesichtsbildern der Zielpersonen wird ebenso durch eine entsprechende Platzierung der Kamera und/oder durch eine entsprechende Anweisung an die Zielperson sichergestellt, dass ein im Wesentlichen frontal aufgenommenes Gesichtsbild erzeugt werden kann. Die Platzierung einer Kamera zu diesem Zweck ist jedoch mit hohem technischen Aufwand verbunden. Die Notwendigkeit zum Befolgen einer Anweisung hinsichtlich der Kopfpositionierung und/oder -ausrichtung durch die Zielperson schränkt den Komfort der Zielperson ein. Insbesondere für den Fahrer eines Kraftfahrzeugs ist ein solches Verfahren auf Dauer nicht praktikabel.

Verschiedene neuere Verfahren beschäftigen sich mit der Aufgabe, die Gesichtserkennung robust gegenüber voneinander abweichenden Aufnahmewinkeln bei aufgenommenem Gesichtsbild und Referenzbild zu machen. Die Gesichtserkennung soll damit insbesondere unabhängig von der Verfügbarkeit eines frontalen Gesichtsbilds realisiert werden. Merkmalsbasierte Verfahren zeichnen sich hierbei im Allgemeinen durch eine höhere Robustheit gegenüber rein auf der Auswertung von Bilddaten basierenden Verfahren (z.B. template matching) aus. Jedoch ist auch bei merkmalsbasierten Verfahren beim Vergleich von Bildern mit übereinstimmenden Aufnahmewinkeln, insbesondere beim Vergleich von Frontalaufnahmen, die beste Erkennungsleistung zu erwarten.

Aus der US 6,681,032 B2 ist ein Verfahren bekannt, in welchem Gesichtsbilder, die aus einem nicht frontalen Aufnahmewinkel aufgenommen sind, durch eine auf einem geometrischen Modell basierende Rechenoperation in ein Frontalbild umgerechnet werden. Der hohe Rechenaufwand für die Transformation, welcher im Kraftfahrzeug nicht oder nur mit hohen Kosten in vertretbarer Zeit zu bewerkstelligen ist, ist jedoch als wesentlicher Nachteil eines solchen Verfahrens anzusehen. Zudem steht die Qualität einer modellbasierten Transformation eines nicht frontal aufgenommenen Gesichtsbildes der Qualität eines frontal aufgenommenen Bildes auch bei hoher Modellqualität unweigerlich nach.

Generell ist zu Verfahren, welche eine Robustheit gegenüber voneinander abweichenden Aufnahmewinkeln bei aufgenommenem Gesichtsbild und Referenzbild beabsichtigen, anzumerken, dass eine solche Robustheit notwendigerweise mit der Absenkung der Zuverlässigkeit eines Systems hinsichtlich einer fälschlichen Identifikation einhergeht. In Anwendungen, in welchen, wie etwa im Kraftfahrzeug, unter Umständen ein dauerhafter und/oder wiederholter Zugriff nicht berechtigter Zielpersonen auf ein Gesichtserkennungssystem möglich ist, ist eine solche Absenkung der Zuverlässigkeit nicht tolerierbar.

Verfahren, welche aus einer Vielzahl aufgenommener Bilder ein dreidimensionales Modell des Gesichts der Zielperson errechnen, scheiden im Kraftfahrzeug wegen des hohen mit solchen Verfahren verbundenen Rechenaufwands aus. Im Folgenden wird von der Verarbeitung zweidimensionaler Gesichtsbilder einer Zielperson und zweidimensionaler Referenzbilder ausgegangen.

Ein weiterer Ansatz zur Lösung des Problems eines nicht definierten Aufnahmewinkels des aufgenommenen Gesichtsbildes einer Zielperson besteht darin, von einer Zielperson mehrere Gesichtsbilder aus unterschiedlichen Aufnahmewinkeln aufzunehmen und/oder in einer Datenbank für jede mögliche Zielperson mehrere Referenzbilder aus unterschiedlichen Aufnahmewinkeln abzulegen. Der anschließende Vergleich aller möglichen Kombinationen eines Gesichtsbildes mit jeweils einem Referenzbild erhöht die Wahrscheinlichkeit, eine Kombination mit in etwa übereinstimmenden Aufnahmewinkeln aufzufinden.

Eine zielgerichtete Auswahl von Kombinationen mit übereinstimendem Aufnahmewinkel ist bei solchen Verfahren in der Regel nicht möglich, da der Aufnahmewinkel selbst zumindest für aufgenommene Gesichtsbilder nicht bekannt ist. Durch die zunehmende kombinatorische Vielfalt steigt der zu leistende Rechenaufwand somit mit zunehmender Anzahl aufgenommener Gesichtbilder bzw. abgelegter Referenzbilder stark an. Für den Einsatz im Kraftfahrzeug sind solche Verfahren deshalb ungeeignet.

Der Rechenaufwand für die Vergleichsoperationen kann gesenkt werden, wenn in einem Verfahren Mittel zur Erfassung des Aufnahmewinkels zur Verfügung stehen. Die Bestimmung des Aufnahmewinkels aus den aufgenommenen zweidimensionalen Gesichtsbildern selbst ist jedoch stark fehlerbehaftet und erfordert eigenen Rechenaufwand. Das Vorsehen einer dedizierten Einrichtung zur Erfassung des in dem Verfahren zur Gesichtserkennung benötigten Aufnahmewinkels ist mit erheblichem technischem Aufwand verbunden. Beide Lösungsansätze sind somit für den Einsatz im Kraftfahrzeug nur bedingt tauglich.

Aufgabe der Erfindung ist es, ein interaktionsarmes und zuverlässiges Verfahren zur Feststellung der Identität des Fahrers eines Kraftfahrzeugs durch Gesichtserkennung zu schaffen, welches ohne das Vorsehen zusätzlicher Einrichtungen und mit geringem Rechenaufwand durchführbar ist.

Gelöst wird die Aufgabe indem der aktuelle Aufnahmewinkel von einer bereits im Kraftfahrzeug vorgesehenen Einrichtung bereitgestellt wird, welche nicht der bildbasierten Fahreridentifikation dient. Der Aufnahmewinkel kann somit ohne das Vorsehen zusätzlicher Einrichtungen als bekannt vorausgesetzt werden.

Ferner wird die Aufgabe gelöst, indem die Aufnahme eines Fahrergesichtsbilds genau dann ausgelöst wird, wenn der aktuelle Aufnahmewinkel einen bestimmten Vorgabewert erreicht. Dadurch wird sichergestellt, dass ein Fahrergesichtsbild mit einem im Wesentlichen dem Vorgabewert entsprechenden Aufnahmewinkel aufgenommen wird, zwischengespeichert werden kann und zum Vergleich mit Referenzbildern herangezogen werden kann.

Im einfachsten Fall wird als einziger Vorgabewert ein frontaler Aufnahmewinkel festgelegt, beim Erreichen des frontalen Aufnahmewinkels wird ein Fahrergesichtsbild aufgenommen, dieses Fahrergesichtsbild zwischengespeichert und zum Vergleich mit Referenzbildern herangezogen.

Bevorzugt werden in einem erfindungsgemäßen Verfahren Fahrergesichtsbilder ausschließlich mit Referenzbildern verglichen, welche im Wesentlichen den gleichen Aufnahmewinkel besitzen. Im oben genannten einfachsten Fall wird das frontal aufgenommene Fahrergesichtsbilder somit ausschließlich mit frontal aufgenommenen Referenzbildern verglichen.

Durch den Vergleich von Fahrergesichtsbildern und Referenzbildern mit im Wesentlichen gleichem, idealerweise frontalem, Aufnahmewinkel ist eine gute Erkennungsleistung generell sichergestellt. Zur weiteren Erhöhung der Zuverlässigkeit eines erfindungsgemäßen Verfahrens zur Gesichtserkennung bzw. zur Sicherstellung der Durchführbarkeit eines solchen Verfahrens werden die folgenden Ausführungsformen und Weiterbildungen vorgeschlagen.

Gemäß verschiedener vorteilhafter Ausführungsformen eines erfindungsgemäßen Verfahrens werden mehrere Vorgabewerte für die Aufnahme von Fahrergesichtsbildern festgelegt. Je nach Ausführungsform der Erfindung werden im Anschluss daran entweder alle oder nur ein Teil der aufgenommenen Fahrergesichtsbilder zwischengespeichert, anschließend werden wiederum alle oder nur ein Teil der zwischengespeicherten Fahrergesichtsbilder zum Vergleich mit Referenzbildern herangezogen.

Da ein erfindungsgemäßes Verfahren möglichst interaktionsarm, d.h. ohne eine Anweisung an den Bediener hinsichtlich dessen Kopfpositionierung oder - ausrichtung, ablaufen soll, kann nicht vorhergesagt werden, ob ein Vorgabewert für den Aufnahmewinkel tatsächlich erreicht wird. Daher kann es sinnvoll sein, zunächst auch Fahrergesichtsbilder mit suboptimalen Aufnahmewinkeln zwischenzuspeichern, diese jedoch später nicht zum Vergleich mit Referenzbildern heranzuziehen, sofern zu einem späteren Zeitpunkt besser verwertbare, d.h. zur Durchführung des Vergleichs mit Referenzbildern auf einem höheren Zuverlässigkeitsniveau geeignete, Fahrergesichtsbilder aufgenommen und zwischengespeichert werden konnten. Auf diese Weise kann einerseits Rechenaufwand für unnötige Vergleichsoperationen eingespart werden, andererseits bleibt die Möglichkeit erhalten, notfalls eine Gesichtserkennung auf Basis der suboptimalen Fahrergesichtsbilder zu starten.

Um zusätzlich Speicherplatz in einem Zwischenspeicher für zwischengespeicherte Fahrergesichtsbilder einzusparen kann es ebenso sinnvoll sein, eine geringere Anzahl von Fahrergesichtsbildern zwischenzuspeichern als Vorgabewerte festgelegt wurden. Als erste Vorgehensweise kann die Zwischenspeicherung oder bereits die Aufnahme von Fahrergesichtsbildern zu suboptimalen Vorgabewerten unterlassen werden, wenn zu einem früheren Zeitpunkt bereits besser verwertbare Fahrergesichtsbilder aufgenommen und zwischengespeichert werden konnten. Zum anderen können bereits zwischengespeichere suboptimale Fahrergesichtsbilder im Zwischenspeicher durch besser verwertbare Fahrergesichtsbilder überschrieben oder ersetzt werden.

Schließlich kann eine gegenüber der Anzahl der Vorgabewerte geringere Anzahl zwischengespeicherter Fahrergesichtsbilder daraus resultieren, dass ausgelöst durch ein bestimmtes Ereignis, etwa den Ablauf eines Timers, die Durchführung von Vergleichsoperationen zur Gesichtserkennung begonnen wird, obwohl noch nicht zu jedem Vorgabewert ein Fahrergesichtsbild aufgenommen werden konnte.

Der konkrete Ablauf eines Überschreibens oder Ersetzens von im Zwischenspeicher zwischengespeicherten Fahrergesichtsbildern kann beispielsweise gesteuert werden, indem Vorgabewerte jeweils mit einer Priorität belegt werden und zwischengespeicherte Fahrergesichtsbilder durch zu einem späteren Zeitpunkt aufgenommene Fahrergesichtsbilder ersetzt werden, deren Vorgabewert mit einer höheren Priorität belegt ist.

In vergleichbarer Weise kann die Auswahl, welche zwischengespeicherten Fahrergesichtsbilder zum Vergleich herangezogen werden, prioritätsgesteuert erfolgen. Hierfür können eigene Prioritäten festgelegt oder die Prioritäten für die Zwischenspeicherung aufgenommener Fahrergesichtsbilder verwendet werden.

Die Festlegung der Anzahl von Vorgabewerten, der Vorgabewerte selbst und deren Prioritäten, aber auch die Festlegung der Anzahl zwischengespeicherter Fahrergesichtsbilder und der Anzahl zum Vergleich herangezogener Fahrergesichtsbilder kann dabei zu Beginn eines Verfahrens erfolgen und/oder im Verlauf des Verfahrens, insbesondere nach der Aufnahme oder der Zwischenspeicherung einzelner Fahrergesichtsbilder an die veränderte Situation angepasst werden.

Durch diese Festlegungen und Anpassungen können nahezu beliebige Verfahrensregeln umgesetzt werden, nach denen die Aufnahme, Zwischenspeicherung und Auswertung von Fahrergesichtsbildern erfolgen soll.

Da nicht immer von einer vollständigen Datenbank mit Referenzbildern aller möglichen Fahrer eines Kraftfahrzeugs aus allen möglichen Aufnahmewinkeln ausgegangen werden kann, erfolgt die Definition der umzusetzenden Verfahrensregeln zweckmäßigerweise orientiert an der Verteilung der Aufnahmewinkel der zur Verfügung stehenden Referenzbilder. Hierzu müssen auch die Aufnahmewinkel der Referenzbilder bekannt und diesen zugeordnet sein.

In Abhängigkeit von den zugrunde liegenden Verfahrensregeln kann das Heranziehen mehrerer zwischengespeicherter Fahrergesichtsbilder zum Vergleich mit Referenzbildern verschiedene Gründe haben.

Zum einen kann die Ursache in einer unvollständigen Datenbank an Referenzbildern liegen. Beispielsweise kann der Fall vorliegen, dass die Datenbank zwar weder für den Aufnahmewinkel A noch für den Aufnahmewinkel B Referenzbilder aller möglichen Fahrer des Kraftfahrzeugs aufweist, jedoch ist für jeden möglichen Fahrer zumindest ein Referenzbild aus einem der beiden Aufnahmewinkel enthalten. In diesem Fall würden bevorzugt ein Fahrergesichtsbild mit dem Aufnahmewinkel A und ein Fahrergesichtsbild mit dem Aufnahmewinkel B zum Vergleich herangezogen.

Zum anderen kann es zur Steigerung der Zuverlässigkeit eines erfindungsgemäßen Verfahrens sinnvoll sein, dass mehrere Fahrergesichtsbilder aus unterschiedlichen Aufnahmewinkeln mit jeweils einem Referenzbild desselben möglichen Fahrers verglichen werden und die Vergleichsergebnisse miteinander verknüpft werden. Eine Verknüpfung kann im einfachsten Fall beispielsweise darin bestehen, das Vergleichsergebnis mit der größten oder kleinsten Übereinstimmung auszuwählen. Alternativ kann jede beliebige Form der Verknüpfung, mathematischen Filterung oder statistischen Auswertung (z.B. Bildung des Mittelwerts, Medians) der einzelnen Vergleichsergebnisse durchgeführt werden.

Einem erfindungsgemäßen Verfahren liegt die speziell im Kraftfahrzeug gültige Annahme zugrunde, dass eine Zielperson, hier der Fahrer des Kraftfahrzeugs, ihren Kopf innerhalb einer endlichen Zeitspanne zumindest vorübergehend in eine bestimmte Richtung ausrichtet, welche im Wesentlichen der Fahrtrichtung entspricht.

Auch in der Zeit noch vor Fahrtantritt, aber nach dem Einsteigen in das Kraftfahrzeug wird eine Kopfausrichtung in Fahrtrichtung bereits durch die Ausrichtung des Fahrersitzes begünstigt. Ist eine Kamera also so im Kraftfahrzeug angebracht, dass sich bei einer im Wesentlichen in Fahrtrichtung ausgerichteten Gesichtsnormalen des Fahrers ein bestimmter Aufnahmewinkel einstellt, so ist sichergestellt, dass zu einem entsprechend spezifizierten Vorgabewert innerhalb endlicher Zeit ein Fahrergesichtsbild aufgenommen werden kann. Diese Voraussetzung ist in vielen modernen Kraftfahrzeugen durch eine zu einer bereits im Kraftfahrzeug vorgesehenen Einrichtung, welche primär nicht der bildbasierten Fahreridentifikation dient, gehörige Kamera erfüllt. Auch das Auftreten sämtlicher Aufnahmewinkel, welche in einer engen Umgebung des bei Kopfausrichtung des Fahrers in Fahrtrichtung bestehenden Aufnahmewinkels liegen, ist durch die natürlichen Kopfbewegungen eines Fahrers mit hoher Wahrscheinlichkeit zu erwarten.

Ein weiterer Vorteil der Erfindung, der sich hieraus ergibt, besteht darin, dass in der Regel keine Aufforderung an den Fahrer gegeben werden muss, durch seine Sitzposition, Kopf- und/oder Körperhaltung einen bestimmten Aufnahmewinkel zu bewirken.

Um in Ausnahmesituationen dennoch eine Identifikation des Fahrers durchführen zu können, wird gemäß einer Weiterbildung der Erfindung nach Ablauf einer vorgegebenen Zeitspanne oder beim Eintreten eines bestimmten Ereignisses, sofern noch nicht alle zur Durchführung der Gesichtserkennung auf einem ausreichenden Zuverlässigkeitsniveau erforderlichen Fahrergesichtsbilder zur Verfügung stehen, eine Aufforderung an den Fahrer gegeben, die Fahreridentifikation durch das Einnehmen einer bestimmten Sitzposition, Kopf- und/oder Körperhaltung zu unterstützen.

Anhand der beigefügten Zeichnungen wird die Erfindung weiter erläutert. Dabei zeigen schematisch

Fig. 1    den Signalfluss zwischen den wesentlichen Verfahrensteilen eines erfindungsgemäßen Verfahrens zur bildbasierten Fahreridentifikation und

Fig. 2    den zeitlichen Ablauf der Aufnahme von Fahrergesichtsbildern gemäß festgelegter Vorgabewerte für den Aufnahmewinkel.

Im Rahmen des folgenden Ausführungsbeispiels soll der Fahrer eines Kraftfahrzeugs durch ein erfindungsgemäßes Verfahren zur bildbasierten Fahreridentifikation unter einer Vielzahl möglicher Fahrer des Kraftfahrzeugs identifiziert werden. In dem Verfahren werden hierzu mittels einer Kamera zweidimensionale Fahrergesichtsbilder aufgenommen. Alle oder ein Teil der aufgenommenen Fahrergesichtsbilder werden in einem Zwischenspeicher zwischengespeichert. Alle oder ein Teil der zwischengespeicherten Fahrergesichtsbilder werden mit zweidimensionalen Referenzbildern jeweils eines möglichen Fahrers verglichen. Jedes zum Vergleich mit Referenzbildern herangezogene Fahrergesichtsbild wird ausschließlich mit Referenzbildern verglichen, welche im Wesentlichen den gleichen Aufnahmewinkel wie das Fahrergesichtsbild besitzen.

Der aktuelle Aufnahmewinkel zwischen der Kamera und der Gesichtsnormalen des Fahrers ist zu jeder Zeit bekannt. Er wird durch eine ansonsten nicht der bildbasierten Fahreridentifikation dienende Einrichtung, hier eine auf den Fahrer des Kraftfahrzeugs bezogene Einrichtung zur Aufmerksamkeitserkennung, bestimmt und an das Verfahren zur bildbasierten Fahreridentifikation weitergegeben. Die Einrichtung zur Aufmerksamkeitserkennung ist in dem Kraftfahrzeug, abgesehen von der Weitergabe des Aufnahmewinkels, funktional entkoppelt von dem Verfahren zur bildbasierten Fahreridentifikation vorgesehen. Gemäß einer bevorzugten Ausführungsform der Erfindung werden weitere Teile der Einrichtung zur Aufmerksamkeitserkennung (z.B. eine Kamera und/oder eine Recheneinheit) zudem für die Durchführung des erfindungsgemäßen Verfahrens zur bildbasierten Fahreridentifikation als gemeinsame Ressource genutzt.

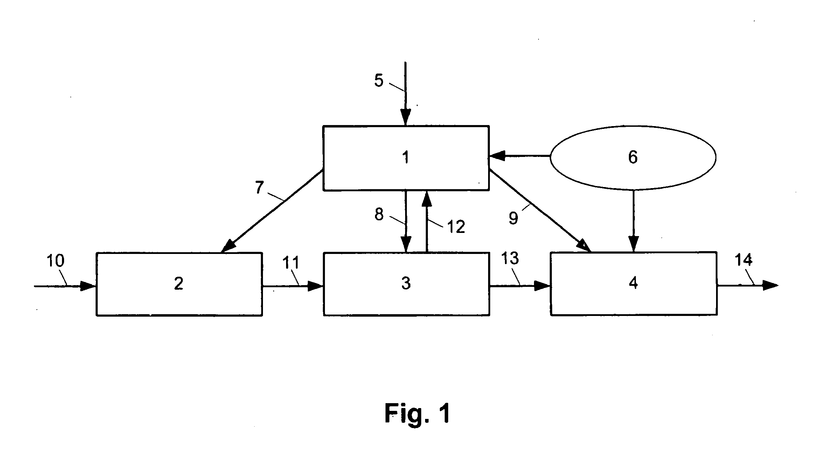

Fig. 1 zeigt schematisch den Signalfluss zwischen den wesentlichen Verfahrensteilen des erfindungsgemäßen Verfahrens zur bildbasierten Fahreridentifikation. In Verfahrensteil 1 wird die zur Verfügung stehende Datenbank 6 mit Referenzbildern hinsichtlich der Verteilung der Aufnahmewinkel der darin enthaltenen Referenzbilder analysiert. Als Ergebnis der Analyse werden verschiedene Verfahrensregeln für die nachfolgende Gesichtserkennung festgelegt. Zur Umsetzung der Verfahrensregeln werden Verfahrensparameter festgelegt und an die anderen Verfahrensteile 2, 3 und 4 übergeben. Die Übergabe erfolgt durch die Signale 7, 8 und 9. Die Festlegung der Verfahrensparameter kann dabei vom Eintreten äußerer Ereignisse wie etwa dem Ablauf eines Timers abhängen. Solche äußeren Ereignisse sind im Signal 5 enthalten, welches in den Verfahrensteil 1 eingeht.

Wird beispielsweise festgestellt, dass in der Datenbank für jeden möglichen Fahrer ein Frontalbild zur Verfügung steht, werden die Verfahrensregeln und -parameter so festgelegt, dass von einem Fahrer genau ein Frontalbild aufzunehmen ist, dieses Bild zwischenzuspeichern ist und zum Vergleich mit Referenzbildern heranzuziehen ist. Es ergeben sich die einfachen Verfahrensparameter:

Anzahl der Vorgabewerte $N_V = 1$, Vorgabewert $V_1 = 0°$, Priorität des Vorgabewerts $P(V_1) = 1$, Anzahl zwischenzuspeichernder Fahrergesichtsbilder $N_Z = 1$, Anzahl zum Vergleich heranzuziehender Fahrergesichtsbilder $N_C = 1$, Verknüpfungsoperation für Vergleichsergebnisse $R_C = $ <keine>.

Wird hingegen festgestellt, dass in der Datenbank 6 nicht von jedem möglichen Fahrer ein frontal aufgenommenes Referenzbild vorliegt, dass jedoch für die übrigen möglichen Fahrer jeweils ein Referenzbild mit dem Aufnahmewinkel +10° vorliegt, könnten die Verfahrensregeln und -parameter so festgelegt werden, dass sowohl aus 0° als auch aus +10° ein Fahrergesichtsbild aufgenommen wird, dass beide zwischengespeichert werden, dass zum Vergleich nur eines von beiden herangezogen wird, dass bei Verfügbarkeit beider Referenzbilder das Fahrergesichtsbild aus 0° herangezogen wird. Die Verfahrensparameter hierzu könnten beispielsweise lauten:

$$N_V = 2, V_1 = 0°, V_2 = +10°, N_Z = 2, N_C = 1, P(V_1) = 1, P(V_2) = 0,5, R_C = \text{<keine>}.$$

Für die obigen beiden Beispiele wird der Durchlauf des Verfahrens im Folgenden im Detail erklärt. Der Durchlauf für kompliziertere Verfahrensregeln ergibt sich sinngemäß. Kompliziertere Verfahrensregeln, welche sich ebenfalls durch die Festlegung von Verfahrensparametern und deren Anpassung im Laufe des Verfahrens umsetzen lässt, könnte lauten:

Für jeden möglichen Fahrer:

```
{
falls Referenzbild 0° verfügbar:
        {
        vergleiche Fahrergesichtsbild 0° mit Referenzbild 0°;
        übergebe Vergleichsergebnis an Identitätsfeststellung;
        }
sonst:
        {
        falls Referenzbild -10° UND +10° verfügbar:
             {
             vergleiche Fahrergesichtsbild -10° mit Referenzbild -10°;
             vergleiche Fahrergesichtsbild +10° mit Referenzbild +10°;
```

```
        übergebe Mittelwert der Vergleichsergebnisse an Identitäts-
        feststellung;
        }
sonst:
        {
        falls Timer abgelaufen:
            {
            vergleiche Fahrergesichtsbild mit höchster Priorität, zu
            welchem ein Referenzbild mit gleichem Aufnahmewin-
            kel verfügbar ist, mit diesem Referenzbild;
            übergebe Vergleichsergebnis an Identitätsfeststellung;
            }
        }
    }
}
```

In Verfahrensteil 2 gemäß Fig. 1 erfolgt die Überwachung des von der Einrichtung zur Aufmerksamkeitserkennung weitergegebenen Aufnahmewinkels 10 und die Aufnahme der durch die Festlegung der Verfahrensparameter 7, insbesondere der Vorgabewerte, "angeforderten" Fahrergesichtsbilder.

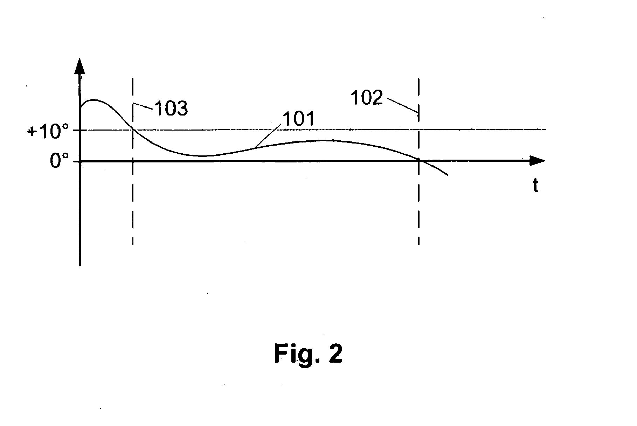

Fig. 2 zeigt den zeitlichen Ablauf der Aufnahme von Fahrergesichtsbildern gemäß festgelegter Vorgabewerte für den Aufnahmewinkel. Die Kurve 101 zeigt exemplarisch einen Zeitverlauf des an das Verfahren zur bildbasierten Fahreridentifikation weitergegeben Aufnahmewinkels. Gemäß dem ersten oben genannten Beispiel ($N_V$=1) wird nur bei 0° ein Fahrergesichtsbild aufgenommen. Der Zeitpunkt 102 kennzeichnet den Zeitpunkt, in welchem die Aufnahme erfolgt. Gemäß dem zweiten oben genannten Beispiel ($N_V$=2) wird sowohl im Zeitpunkt 102 bei 0° als auch bereits zuvor im Zeitpunkt 103 bei +10° je ein Fahrergesichtsbild aufgenommen.

Im Verfahrensteil 2 aufgenommene Fahrergesichtsbilder werden an den Verfahrensteil 3 übergeben (Signal 11). Sind noch nicht alle "angeforderten" Fahrergesichtsbilder aufgenommen, so bleibt der Verfahrensteil 2 weiterhin aktiv.

In Verfahrensteil 3 werden aufgenommene Fahrergesichtsbilder entsprechend den empfangenen Verfahrensparametern 8 zwischengespeichert. In obigem Beispiel wird im Verfahrensteil 3 das einzige aufgenommene Fahrergesichtsbild zwischengespeichert ($N_Z$ = 1). Im zweiten Beispiel werden beide aufgenommenen Fahrergesichtsbilder zwischengespeichert ($N_Z$ = 2).

In anderen Fällen kann es vorkommen, dass einzelne empfangene Fahrergesichtsbilder 11 gemäß den Verfahrensregeln und Verfahrensparametern 8 nicht zwischengespeichert werden. Eine entsprechende Verfahrensregel könnte etwa lauten: "Aufnahme von Fahrergesichtsbildern zu 4 Vorgabewerten, Zwischenspeicherung desjenigen Fahrergesichtsbildes mit der höchsten Priorität aller bisher aufgenommenen Fahrergesichtsbilder." In den meisten Fällen können entsprechende Verfahrensregeln jedoch effizienter durch eine im Folgenden beschriebene Anpassung der Verfahrensparameter in Abhängigkeit von bereits erfolgten Aufnahmen und Zwischenspeicherungen umgesetzt werden.

Die Aufnahme oder die Zwischenspeicherung von Fahrergesichtsbildern zu bestimmten Vorgabewerten wird hierzu dem Verfahrensteil 1 mitgeteilt. Gemäß Fig. 1 erfolgt eine Mitteilung der Zwischenspeicherung über das Signal 12. Daraufhin werden im Verfahrensteil 1 die Verfahrensparameter und -regeln in Abhängigkeit von den bereits zwischengespeicherten Fahrergesichtsbildern angepasst. Beispielsweise können durch die Anpassung im einfachsten Fall die Vorgabewerte zu bereits aufgenommenen oder zwischengespeicherten Fahrergesichtsbildern entfallen. Häufig können auch Vorgabewerte, welche gegenüber den Vorgabewerten bereits aufgenommener oder zwischengespeicherter Fahrergesichtsbilder mit niedrigerer Priorität belegt sind, entfernt werden. Im Fall komplizierterer Verknüpfungen, können ganze Teilregeln und somit ebenfalls mehrere Vorgabewerte wegfallen bzw. die Vergabe von Prioritäten für Vorgabewerte obsolet werden.

Über das Signal 13 gemäß Fig. 1 werden die zwischengespeicherten Fahrergesichtsbilder dem Verfahrensteil 4 zur Verfügung gestellt. Hier erfolgt der Vergleich mit den Referenzbildern aus der Datenbank 6. Gemäß den Verfahrensparametern 9 wird gegebenenfalls nur ein Teil der zwischengespeicherten Fahrergesichtsbilder zum Vergleich herangezogen.

Im ersten obigen Beispiel wird das einzige zwischengespeicherte Fahrergesichtsbilder zum Vergleich herangezogen. Im zweiten Beispiel wird für jeden möglichen Fahrer ebenfalls nur ein zwischengespeichertes Fahrergesichtsbild zum Vergleich herangezogen. Jedoch wird gemäß den Prioritäten der zu den Fahrergesichtsbildern gehörigen Vorgabewerte entschieden, welches Fahrergesichtsbild bevorzugt verwendet wird. Im Beispiel gilt: $P(V_1) > P(V_2)$. Dementsprechend wird bei Verfügbarkeit von Referenzbildern zu $V_1$ und $V_2$ das Fahrergesichtsbild zu $V_1$ verwendet.

Bei der Umsetzung komplizierterer Verfahrensregeln werden mehrere Fahrergesichtsbilder mit jeweils passenden Referenzbildern desselben möglichen Fahrers verglichen. Die einzelnen Vergleichsergebnisse werden anschließend beispielsweise durch eine Mittelwertsbildung verknüpft (vgl.: keine Verknüpfungsoperation in den ersten beiden Beispielen).

Die Identität des Fahrers wird anschließend ebenfalls noch im Verfahrensteil 4 in an sich bekannter Weise aus den Vergleichsergebnissen bzw. deren Verknüpfungen, welche jeweils ein Maß für die Übereinstimmung der zum Vergleich herangezogenen Fahrergesichtsbilder mit den zum Vergleich herangezogenen Referenzbildern möglicher Fahrer des Kraftfahrzeugs darstellen, ermittelt und als Signal 14 ausgegeben.

Die obigen Ausführung beziehen sich auf die Berücksichtigung eines einzigen Aufnahmewinkels. In der Praxis wird dies insbesondere der Verdrehwinkel zwischen der Gesichtsnormalen des Fahrers und der Kamera um die Hochachse sein. Die angestellten Überlegungen lassen sich jedoch in analoger Weise auf die zusätzliche Berücksichtigung zumindest eines weiteren Raumwinkels erweitern.

**Patentansprüche**

1. Verfahren zur bildbasierten Fahreridentifikation in einem Kraftfahrzeug durch die Aufnahme mindestens eines zweidimensionalen Fahrergesichtsbilds mittels einer Kamera, die Zwischenspeicherung aufgenommener Fahrergesichtsbilder und den Vergleich zwischengespeicherter Fahrergesichtsbilder mit zweidimensionalen Referenzbildern jeweils eines möglichen Fahrers aus einer Vielzahl möglicher Fahrer des Kraftfahrzeugs,
**dadurch gekennzeichnet, dass**
der aktuelle Aufnahmewinkel zwischen der Kamera und der Gesichtsnormalen des Fahrers durch eine ansonsten nicht der bildbasierten Fahreridentifikation dienende Einrichtung bestimmt und an das Verfahren zur bildbasierten Fahreridentifikation weitergegeben wird und
die Aufnahme eines Fahrergesichtsbilds ausgelöst wird, wenn der aktuelle Aufnahmewinkel einen bestimmten Vorgabewert erreicht.

2. Verfahren nach Anspruch 1, **dadurch gekennzeichnet, dass**
jedes zum Vergleich mit Referenzbildern herangezogene Fahrergesichtsbild ausschließlich mit Referenzbildern verglichen wird, welche im Wesentlichen den gleichen Aufnahmewinkel wie das Fahrergesichtsbild besitzen.

3. Verfahren nach einem der Ansprüche 1 oder 2, **dadurch gekennzeichnet, dass** die Anzahl der Fahrergesichtsbilder, die zum Vergleich mit Referenzbildern herangezogen werden, kleiner ist als die Anzahl der zwischengespeicherten Fahrergesichtsbilder.

4. Verfahren nach einem der Ansprüche 1 bis 3, **dadurch gekennzeichnet, dass** die Anzahl der zwischengespeicherten Fahrergesichtsbilder kleiner ist als die Anzahl der festgelegten Vorgabewerte.

5. Verfahren nach einem der Ansprüche 3 oder 4, **dadurch gekennzeichnet, dass**
die Vorgabewerte jeweils mit einer Priorität belegt werden und
die Zwischenspeicherung aufgenommener Fahrergesichtsbilder und/oder die Auswahl zwischengespeicherter Fahrergesichtsbilder zum Vergleich mit Referenzbildern auf Basis der Prioritäten erfolgt.

6. Verfahren nach einem der Ansprüche 1 bis 5, **dadurch gekennzeichnet, dass** mindestens einer der Parameter Anzahl von Vorgabewerten, Vorgabewerte, Priorität der Vorgabewerte, Anzahl zwischengespeicherter Fahrergesichtsbilder und Anzahl zum Vergleich herangezogener Fahrergesichtsbilder orientiert an der Verteilung der Aufnahmewinkel der zur Verfügung stehenden Referenzbilder gewählt wird.

7. Verfahren nach einem der Ansprüche 1 bis 6, **dadurch gekennzeichnet, dass** mindestens einer der Parameter Anzahl von Vorgabewerten, Vorgabewerte, Priorität der Vorgabewerte, Anzahl zwischengespeicherter Fahrergesichtsbilder und Anzahl zum Vergleich herangezogener Fahrergesichtsbilder im Verlauf des Verfahrens, insbesondere nach der Aufnahme oder Zwischenspeicherung eines Fahrergesichtsbilds, orientiert an der Anzahl und der Verteilung der Aufnahmewinkel der aufgenommenen oder zwischengespeicherten Fahrergesichtsbilder angepasst wird.

8. Verfahren nach einem der Ansprüche 1 bis 7, **dadurch gekennzeichnet,**
**dass** mindestens zwei zum Vergleich herangezogene Fahrergesichtsbilder mit jeweils einem Referenzbild desselben möglichen Fahrers verglichen werden und die Vergleichsergebnisse miteinander verknüpft werden.

9. Verfahren nach einem der Ansprüche 1 oder 2, **dadurch gekennzeichnet, dass**
genau ein Fahrergesichtsbild aus im Wesentlichen frontalem Aufnahmewinkel aufgenommen wird.

10. Verfahren nach einem der Ansprüche 1 bis 9, **dadurch gekennzeichnet, dass** nach dem Eintreten eines bestimmten Ereignisses, sofern die zur Verfügung stehenden Fahrergesichtsbilder nicht zur sicheren Fahreridentifikation ausreichen, eine Aufforderung an den Fahrer gegeben wird, durch seine Sitzposition, Kopf- und/oder Körperhaltung einen bestimmten Aufnahmewinkel zu bewirken.

**Claims**

1. A method for image-based driver identification in a motor vehicle by recording at least one two-dimensional driver's facial image by means of a camera, temporarily storing recorded driver's facial images and comparing temporarily stored driver's facial images with two-dimensional reference images of a respective possible driver from a large number of possible drivers of the motor vehicle, **characterised in that** the current recording angle between the camera and the facial normal line of the driver is determined by a device not otherwise used for image-based driver identification and passed to the method for image-based driver identification and the recording of a driver's facial image is triggered when the current recording angle reaches a specific preset value.

2. A method according to claim 1, **characterised in that** each driver's facial image used for comparison with reference images is compared exclusively with reference images which have substantially the same recording angle as the driver's facial image.

3. A method according to either of claims 1 or 2, **characterised in that** the number of driver's facial images, which are used for comparison with reference images, is smaller than the number of temporarily stored driver's facial images.

4. A method according to any one of claims 1 to 3, **characterised in that** the number of temporarily stored driver's facial images is smaller than the number of established preset values.

5. A method according to either of claims 3 or 4, **characterised in that** the preset values are in each case assigned a priority and the temporary storage of recorded driver's facial images and/or the selection of temporarily storage driver's facial images for comparison with reference images is carried out on the basis of priorities.

6. A method according to any one of claims 1 to 5, **characterised in that** at least one of the parameters of number of preset values, preset values, priority of the preset values, number of temporarily stored driver's facial images and number of driver's facial images used for comparison is selected, oriented to the distribution of the recording angles of the reference images available.

7. A method according to any one of claims 1 to 6, **characterised in that** at least one of the parameters of number of preset values, preset values, priority of the preset values, number of temporarily stored driver's facial images and number of driver's facial images used for comparison in the course of the method, is adapted, more especially, after the recording or temporary storage of a driver's facial image, oriented to the number and the distribution of the recording angles of the recorded or temporarily stored driver's facial images.

8. A method according to any one of claims 1 to 7, **characterised in that** at least two driver's facial images used for comparison are compared with one respective reference image of the same possible driver and the comparison results are linked with one another.

9. A method according to either of claims 1 or 2, **characterised in that** precisely one driver's facial image is recorded from a substantially frontal recording angle.

10. A method according to any one of claims 1 to 9, **characterised in that** after a specific event has occurred, if the available driver's facial images are not sufficient for reliable driver identification, a request is made to the driver to bring about a specific recording angle by means of his sitting position, head and/or body posture.

**Revendications**

1. Procédé d'identification du conducteur d'un véhicule automobile fondé sur l'image par la prise de vue d'au moins un portrait bidimensionnel du conducteur à l'aide d'une caméra, l'enregistrement intermédiaire des portraits pris du conducteur et la comparaison des portraits du conducteur, enregistrés de façon intermédiaire, à des images de référence, bidimensionnelles d'un conducteur, possible parmi un grand nombre de conducteurs possibles du véhicule,

**caractérisé en ce que**

l'angle de prise de vue actuel entre la caméra et la direction normale au visage du conducteur est défini par une installation ne servant par ailleurs pas à l'identification du conducteur, fondée sur l'image et étant transmis au procédé d'identification du conducteur fondé sur l'image, et

la prise de vue d'un portrait du conducteur est déclenchée lorsque l'angle de prise de vue actuel atteint une valeur de consigne, prédéfinie.

**2.** Procédé selon la revendication 1,

**caractérisé en ce que**

chaque portrait du conducteur utilisé pour sa comparaison à des images de référence est exclusivement comparé aux images de référence qui ont pratiquement le même angle de prise de vue que le portrait du conducteur.

**3.** Procédé selon la revendication 1 ou 2,

**caractérisé en ce que**

le nombre de portraits du conducteur utilisés pour la comparaison aux images de référence est inférieur au nombre de portraits du conducteur enregistrés provisoirement.

**4.** Procédé selon les revendications 1 à 3,

**caractérisé en ce que**

le nombre de portraits du conducteur enregistrés de manière provisoire est inférieur au nombre de valeurs de consigne prédéterminées.

**5.** Procédé selon la revendication 3 ou 4,

**caractérisé en ce qu'**

une priorité est attribuée à chacune des valeurs prédéfinies, et l'enregistrement provisoire des portraits pris, du conducteur et/ou la sélection de portraits du conducteur enregistrés de manière provisoire pour la comparaison avec les images de référence, se font en fonction des priorités.

**6.** Procédé selon les revendications 1 à 5,

**caractérisé en ce qu'**

on sélectionne de façon orientée selon la distribution des angles de prise de vue des images de référence disponibles au moins l'un des paramètres: nombre de valeurs de consigne, valeurs de consigne, priorité des valeurs de consigne, nombre de portraits du conducteur enregistrés de manière provisoire et nombre de portraits du conducteur utilisés pour la comparaison,

**7.** Procédé selon les revendications 1 à 6,

**caractérisé en ce qu'**

au moins l'un des paramètres, à savoir le nombre de valeurs de consigne, les valeurs de consigne, la priorité des valeurs de consigne, le nombre de portraits enregistrés de manière provisoire et le nombre de portraits du conducteur utilisés pour la comparaison, sont adaptés au cours du procédé notamment après la prise de vue et l'enregistrement provisoire d'un portrait du conducteur, de façon orientée selon le nombre et la répartition des angles de prise de vue des portraits du conducteur, pris et enregistrés de manière provisoire.

**8.** Procédé selon les revendications 1 à 7,

**caractérisé en ce qu'**

on compare chaque fois au moins deux portraits du conducteur utilisés pour la comparaison avec chaque fois une image de référence du même conducteur possible et on combine entre les résultats de la comparaison.

**9.** Procédé selon la revendication 1 ou 2,

**caractérisé en ce qu'**

on prend un portrait du conducteur suivant un angle de prise de vue pratiquement frontal.

**10.** Procédé selon les revendications 1 à 9,

**caractérisé en ce qu'**

après l'occurrence d'un certain évènement, dans la mesure où les portraits disponibles du conducteur ne suffisent pas pour la sécurité de l'identification du conducteur, une requête est transmise au conducteur pour modifier sa position assise, son port de tête et/ du corps par rapport à un certain angle de prise de vue.

**Fig. 1**

**Fig. 2**

**EP 1 789 906 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6681032 B2